# FASCICULE DE BREVET EUROPEEN

(11) **EP 1 164 806 B1**
(45) Date de publication et mention de la délivrance du brevet: **01.10.2003**
(21) Numéro de dépôt: 01401379.1
(22) Date de dépôt: 23.05.2001
(51) Int. Cl.: H04Q 7/32

(54) **Procédé de gestion d'un module de communication et dispositif comportant un tel module**
Verfahren zur Verwaltung eines Moduls zur Kommunikation und eine Einrichtung die ein solches Modul enthält
A method for the management of a communications modul and a device containing such module

(30) Priorité: 15.06.2000 FR 0007662
(43) Date de publication de la demande: 19.12.2001
(73) Titulaire: SAGEM S.A., 75015 Paris (FR)
(72) Inventeur: Quentin, Pierre M., 95880 Enghein (FR); Clerc, Emmanuel M., 93160 Noisy le Grand (FR)
(74) Mandataire: Schmit, Christian Norbert Marie

(56) Documents cités:
- US-A- 5 887 266
- "Digital cellular telecommunications system (Phase 2+); Specification of the SIM Application Toolkit for the Subscriber Identity Module - Mobile Equipment (SIM - ME ) interface." GSM TECHNICAL SPECIFICATION, 1 juillet 1997 (1997-07-01), pages 1-05,7,09-, XP002064640 Valbonne - France

## Description

L'invention a pour objet un procédé de gestion d'un module de communication et dispositif comportant un tel module. Le domaine de l'invention est celui des communications électroniques et des modules d'extension pour des appareils tels que des terminaux électroniques de gestions de données. Par terminal on entend donc un appareil du type organiseur électronique, assistant personnel électronique ou même ordinateur personnel. Le but de l'invention est d'augmenter l'autonomie d'un tel terminal auquel est connecté un module de communication. Un autre but de l'invention est de standardiser une interface de communication entre un terminal et un module de communication.

Par module de communication on entend un appareil comportant des moyens pour établir une connexion avec un autre appareil distant, mais ne comportant pas d'interface homme-machine. Pour illustrer on peut dire qu'un téléphone mobile peut servir comme module de communication lorsqu'on s'en sert comme modem, mais ce n'est pas un module de communication au sens de l'invention.

Dans l'état de la technique, on connaît un terminal que l'on peut connecter à un module de communication, par exemple par une liaison série. Le module de communication peut alors être un module GSM, le terminal étant un ordinateur personnel. Le module GSM comporte alors les moyens nécessaires à l'établissement d'une connexion hertzienne avec une station de base d'un réseau GSM, ainsi qu'une carte microcircuit par exemple de type SIM ou SIM toolkit. Une carte SIM est définie par les standards ISO 7816, ainsi que par les recommandations GSM 1, 2 et 2+. La carte SIM est principalement un ensemble de fichiers auxquels il est possible d'accéder via des commandes standardisées. Une carte SIM comporte donc un ensemble de commande et des fichiers qui peuvent être accédés selon des protocoles d'authentification qui permettent d'assurer la sécurité des données contenues dans les fichiers de la carte SIM. La différence entre une carte SIM simple et une carte SIM toolkit est que la SIM toolkit est dite proactive. C'est-à-dire qu'elle peut initier des actions sur un module GSM ou un terminal. Une carte SIM toolkit ne fait donc pas que répondre à des sollicitations extérieures. Elle peut aussi commander des actions à effectuer, ainsi que décrit dans le document US 5 887 266 A.

Dans l'état de la technique un module GSM ne peut pas fonctionner sans carte SIM. En effet, la carte SIM contient tous les renseignements concernant un abonné à un réseau de téléphonie mobile. Pour se connecter à un réseau de téléphonie mobile, le module GSM a besoin de ces renseignements. Dans l'état de la technique, le module GSM et la carte SIM sont pilotés par le terminal auquel le module GSM est connecté. Selon la norme, la carte SIM reçoit des réponses auxquelles elle répond. Par exemple pour la consultation d'un fichier, la carte SIM reçoit plusieurs instructions de type SELECT pour positionner un pointeur de lecture sur le bon fichier. A chacune des instructions SELECT, la carte SIM envoie une réponse et cette réponse est elle-même suivie d'une instruction GET RESPONSE afin d'obtenir des informations sur le fichier sur lequel est positionné le pointeur de lecture. Dans l'état de la technique, toutes ces informations circulent par la connexion existant entre le module GSM et le terminal. De plus tous les ordres sont émis par le terminal, et toutes les réponses de la carte SIM sont interprétées par le terminal. Cela conduit à un encombrement important sur la connexion entre le terminal et le module. Cela conduit aussi à une activité importante d'un microprocesseur du terminal lié à la gestion de la carte SIM.

Ces problèmes sont encore plus aigus dans le cas de la carte SIM toolkit. En effet, la carte SIM est alors capable de produire des commandes devant être exécutées soit par le module GSM, soit par le terminal, soit par les deux. Dans l'état de la technique, lorsque la carte SIM toolkit émet une commande qui doit être exécutée par le module GSM, cette commande est dans un premier temps reçue et décodée par le terminal. Le terminal reçoit cette commande via la connexion qui le lie au module GSM. Puis le terminal détecte que cette commande ne lui est pas adressée et la renvoie par la même connexion au module GSM pour que celui-ci l'exécute. Si l'exécution de cette commande appelle une réponse, cette réponse sera d'abord envoyée au terminal qui la renverra à la carte SIM toolkit. Dans ce cas de figure il y a donc une quantité importante de données qui circulent sur la connexion entre le terminal et le module GSM, et une quantité d'informations importantes traitées par un microprocesseur du terminal.

De plus, dans l'état de la technique, une carte SIM toolkit n'émet pas spontanément des réponses. En fait la carte SIM toolkit est, à intervalles réguliers, sollicitée par une commande de polling. La carte SIM toolkit répond à cette commande par un code qui indique si elle souhaite émettre une commande ou pas. Si elle souhaite émettre une commande, elle le signale dans sa réponse à la commande de polling. Elle recevra alors une commande de FETCH en réponse à laquelle elle pourra envoyer sa commande proactive. Dans l'état de la technique, les commandes de polling et de FETCH sont émises par le terminal. Ces commandes circulent donc sur la connexion entre le terminal et le module GSM. Toutes ces commandes sont aussi gérées par le microprocesseur du terminal. L'activité du terminal, et l'encombrement de la connexion entre le terminal et le module GSM, est donc importante en partie à cause de la simple gestion de la carte SIM ou SIM toolkit. Cela signifie qu'il y a une activité importante au niveau du microprocesseur, et donc une consommation d'énergie importante, donc au final une réduction de l'autonomie du terminal.

Dans l'invention on résout ces problèmes en déportant la gestion de la carte SIM standard dans le module GSM, et en répartissant la gestion de la carte SIM toolkit entre le module GSM et le terminal auquel le module est connecté. En particulier on filtre dans le module GSM les messages émis par la carte SIM toolkit afin que seuls ceux intéressant vraiment le terminal lui soit transmis. De même le polling de la carte SIM toolkit est assuré par le module GSM. On limite ainsi la quantité d'informations qui circule sur la connexion entre le module GSM et le terminal, on limite aussi l'activité d'un microprocesseur du terminal. En effet ce microprocesseur n'a plus qu'à traiter des messages intéressant directement le terminal et ses capacités, par exemple une interface homme-machine.

L'invention a donc pour objet un procédé de gestion d'un module de communication, selon la revendication 1.

L'invention a également pour objet un dispositif de communication comportant un terminal, selon la revendication 7.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyen utiles à la mise en oeuvre du procédé selon l'invention ;
- Figure 2 : une illustration d'étapes du procédé selon l'invention.

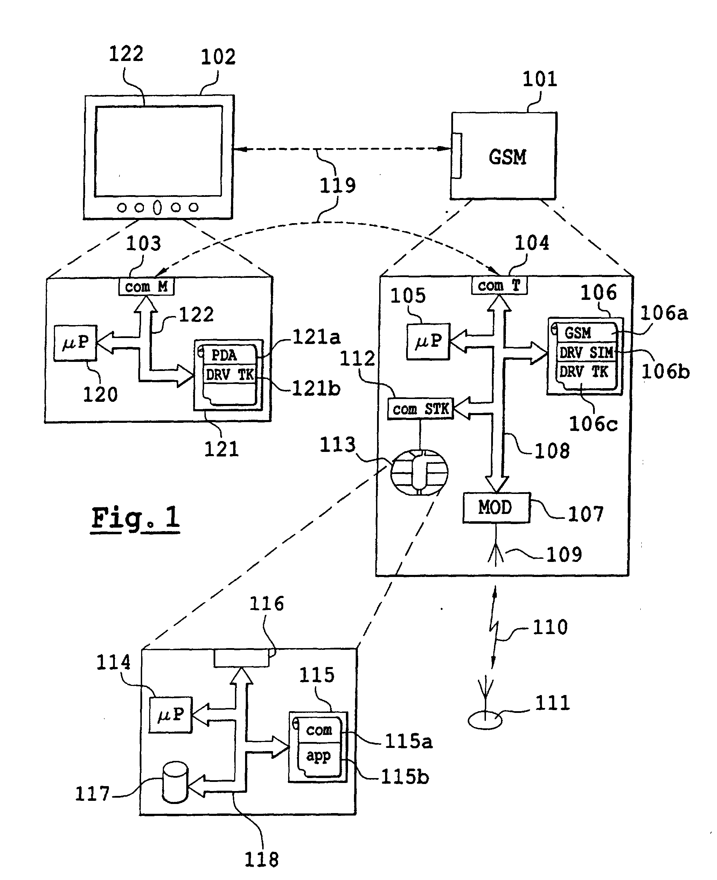

La figure 1 montre un module 101 de communication. Dans l'exemple de la description, le module 101 est un module GSM. Dans l'état de la pratique le module 101 peut aussi être un module UMTS, DCS ou d'une autre norme de communication. Le module 101 est connecté à un terminal 102. Dans l'exemple de la description, on choisit que le terminal 102 est un PDA (Personnal Digital Assistant, ou assistant personnel électronique). Le PDA 102 peut réaliser des fonctions d'agenda, d'organiser, de mémorisation avec ou sans fonctions de rappel, et d'horloge diverses. Tout seul, le terminal 102 n'est pas capable de communiquer via un réseau téléphonique. Le terminal 102 comporte néanmoins un port 103 sur lequel on peut connecter un module d'extension, par exemple un module de communication tel que le module 101. A cet effet, le module 101 comporte un port 104 correspondant au port 103 du PDA 102. Dans la pratique, le PDA 102 comporte un réceptacle pour recevoir le module 101. Au sein de ce réceptacle se trouve le port 103 dans lequel vient s'enficher un connecteur 104 du module 101.

La figure 1 montre que le module 101 comporte un microprocesseur 105, une mémoire 106 et des circuits 107 de modulation et démodulation. Les éléments 104 à 107 sont connectés à un bus 108. Un bus est un ensemble de fils ou de pistes contenant ces éléments en nombre suffisant pour véhiculer des signaux de données, d'adresses, de commandes, d'interruptions et d'horloge. Dans cette description, lorsqu'on prête une action à un microprocesseur celle-ci est effectuée par ce microprocesseur commandé par des codes instructions enregistrés dans une mémoire.

Les circuits 107 sont connectés à une antenne 109. Cette antenne 109 permet d'établir une liaison 110 hertzienne avec une station de base 111 d'un réseau téléphonique cellulaire. Dans la présente description on considère que le réseau téléphonique dit cellulaire est de type GSM. Mais rien ne s'oppose à ce que le réseau soit par exemple un réseau DCS ou un réseau UMTS, ou tout autre type de réseau de télécommunication.

La mémoire 106 comporte plusieurs zones, une première zone 106a comporte des codes instructions qui commandent le microprocesseur 105 lorsque le microprocesseur 105 doit effectuer une tâche de communication. Les éléments 105, 106a, 108, 107 et 109 constituent donc des moyens pour remplir une fonction de communication du module 101. La mémoire 106 comporte une deuxième zone 106b qui comporte des codes instructions qui commandent le microprocesseur 105 lorsqu'il s'agit de gérer une carte SIM du module 101. Une zone 106c comporte des codes instructions qui commandent le microprocesseur 105 lorsqu'il s'agit de gérer une carte SIM toolkit. La zone 106 comporte d'autre zones, notamment des zones de travail et de stockage de données qui ne sont pas représentées sur la figure 1.

La figure 1 montre que le module 101 comporte des circuits 112 de communication avec la carte SIM toolkit. Dans la pratique les circuits 112 peuvent être par exemple une UART (Universal Asynchronous Receiver Transmitter, receveur émetteur asynchrone universel) permettant d'établir une liaison série avec une carte 113 SIM toolkit. Dans une variante de l'invention, il est possible que le module 101 comporte en fait deux cartes du type SIM, une carte SIM proprement dite et une carte toolkit. Dans ce cas, il existe deux circuits du type du circuit 112 affin de pouvoir communiquer avec les deux cartes SIM, et SIM toolkit.

Dans la pratique une carte de type SIM toolkit ne fait pas partie intégrante du module 101. En revanche le module 101 comporte au moins un réceptacle pour une carte SlM toolkit. Le module 101 ne fonctionne en général pas s'il n'y a pas une carte SIM dans ce réceptacle.

La figure 1 montre que la carte 113 SIM toolkit comporte un microprocesseur 114, une mémoire 115 de programme, des circuits 116 de communication et une mémoire 117 de stockage. Les éléments 114 à 116 sont connectés par un bus 118. La mémoire 115 comporte une zone 115a qui permet à la carte 113 de communiquer avec le module 101, et notamment le microprocesseur 105, via les circuits 116 et 112. En effet, les circuits 116 permettent d'établir une communication entre le module et la carte 113 via le circuit 112. La mémoire 115 comporte aussi une zone 115b qui comporte des codes instructions qui commandent le microprocesseur 114 lorsque celui-ci exécute une application propre à la carte SIM toolkit. Cette application peut par exemple être dédié à la gestion d'une messagerie électronique, à la navigation sur un réseau Internet selon la norme WAP, ou à d'autres services offerts par le réseau de télécommunication auquel est abonné l'utilisateur du module 101. La norme WAP (Wireless Application Protocol) est le pendant de la norme HTTP adapté aux capacités des interfaces homme machine (IHM) des appareils portables tel que les téléphones mobiles ou les PDA.

Le PDA 102 et le module 101 sont connectés via une liaison 119. Sur la figure 1 cette liaison était réalisée entre des circuit 103 et 104. Par exemple les circuits 103 et 104 sont les deux éléments d'une interface du type PCMCIA. Cependant, dans une variante de l'invention, on peut envisager que le module 101 ne soit pas spécifiquement connecté au terminal 102. Dans ce cas, le module 101 comporte en lieu et place des circuits 104, par exemple, un circuit BlueTooth. Le PDA 102 comporte alors à la place du circuit 103 lui aussi un circuit BlueTooth. Ainsi on peut établir entre le PDA 102 et le module 101 une communication de type BlueTooth. On peut ainsi envisager tout type de connexion entre le PDA 102 et le module 101 sans que cela porte préjudice à la nature de l'invention.

La figure 1 montre que le PDA 102 comporte un microprocesseur 120 et une mémoire 121. Les éléments 103, 120 et 121 sont connectés par un bus 122. La mémoire 121 comporte plusieurs zones. Une première zone 121a comporte des codes instructions qui commandent le microprocesseur 120 lorsque celui-ci exécute des instructions en rapport avec la réalisation des fonctions de PDA. Ces fonctions peuvent être par exemple, un agenda, ou un organiseur. La mémoire 121 comporte une deuxième zone 121b qui comporte des codes instructions qui commandent le microprocesseur 120 lorsque celui-ci traite des messages issus de la carte 113. La mémoire 121 comporte d'autre zones, notamment une zone de travail et de stockage de données, qui ne sont pas représentées sur la figure 1.

Le module 101 comporte donc, dans les zones 106b et c, des codes instructions qui commandent le microprocesseur 105 lorsque celui-ci est amené à gérer des messages issus de la carte 113 relatifs et à une application toolkit. Ces codes instructions permettent entre autres, de répartir les messages émis par la carte 113 entre le module 101 et le PDA 102. Lorsque le microprocesseur 105 détecte un message destiné au PDA 102, notamment un message relatif à l'interface homme-machine, le microprocesseur 105 émet ce message via les circuits 104. Les moyens pour repartir les messages coopèrent donc bien avec les moyens pour communiquer entre le module 101 et le PDA 102.

Un message ainsi envoyé est reçu par le microprocesseur 120 via les circuits 103. Le microprocesseur 120 est alors commandé par les codes instructions de la zone 121b. Les moyens de gestion du microcircuit comporté dans le PDA 102 coopèrent donc bien avec ces moyens de communication avec le module 101. Dans la description, on considère que l'interface homme-machine est mise en oeuvre par des codes instructions comportée dans la zone 121a. En effet, une interface homme-machine ergonomique est l'un des attributs des appareils du type du PDA 102.

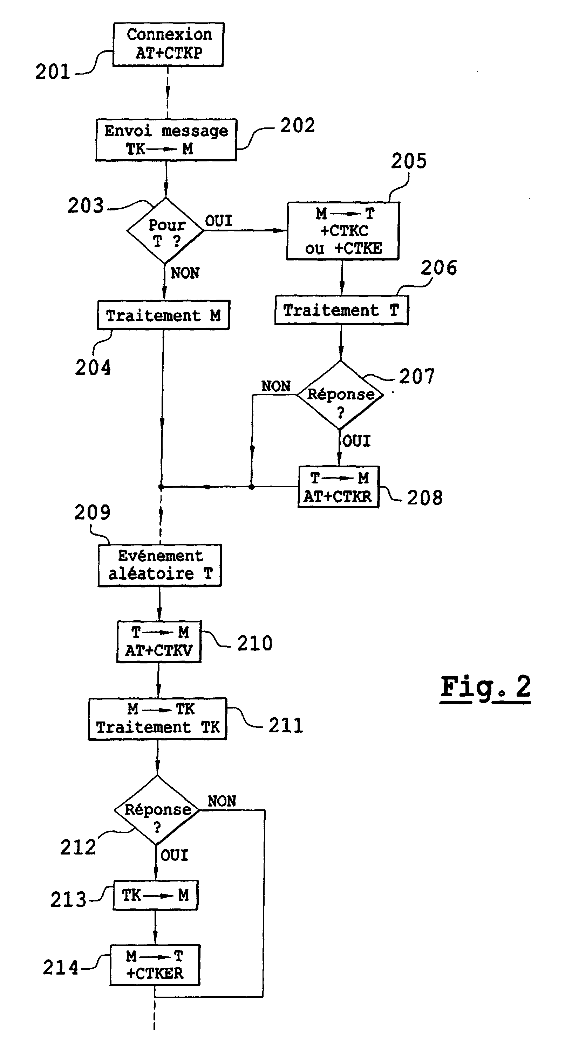

La figure 2 montre une étape préliminaire 201 de connexion du module 101 au PDA 102. Dans l'étape 201, le microprocesseur 120 a constitué un message et l'a envoyé vers le module 101. L'envoi des messages se fait toujours via la connexion 119. Lorsque le microprocesseur 105 répond ou traite un message qu'il a reçu du PDA 102 ou de la carte 113, il est commandé par les codes instructions de la zone 106b ou 106c selon l'origine et la destination du message. Si le message concerne une application de la carte SIM c'est la zone 106b, si le message concerne l'application de la carte toolkit c'est la zone 106c. De même lorsque le microprocesseur 120 traite ou envoie un message qu'il a reçu via la connexion 119, si le message concerne une application toolkit, ce message est traité par des codes instructions de la zone 121b.

Dans l'étape 201 le microprocesseur 120 constitue un message pour indiquer au module 101, et plus particulièrement à la carte 113, quelles sont les possibilités du PDA 102. Plus particulièrement, ce message sera formaté selon un standard du type HAYES. Le format HAYES correspond à des messages constitués d'un code de commande, souvent précédé par AT, et d'une liste de paramètre. Le protocole Hayes est asymétrique: il y a un maître et un esclave. Le maître envoie des commandes précédées de AT, l'esclave envoie des réponses au commandes, ou des réponses non sollicitées. Ces réponses ne sont, en général, pas précédée de AT. Les messages sont constitués grâce à des caractères affichables du code ASCII. Le format est largement utilisé pour communiquer avec des modems via une liaison série. C'est-à-dire que le message est envoyé comme une série d'octets. Les premiers octets correspondant à une commande dite AT au format HAYES, les octets qui suivent la commande correspondent à des paramètres de cette commande. La commande, ou message, envoyée par le PDA 102 dans l'étape 201 vers le module 101 est donc une commande dont l'entête est
AT+CTKP liste de paramètres.

Cette liste de paramètres est constituée de codes prédéterminés qui indiquent quelles sont les fonctions en rapport avec une application toolkit que le microprocesseur 120 peut traiter. Il peut par exemple s'agir d'une application monétique, d'une application de type WAP, d'une application de messagerie, ou de toute autre application qu'on peut réaliser à l'aide d'une carte de type toolkit. Ce message une fois constitué est émis par le PDA 102 en direction du module 101. Le message est donc reçu par le module 101 et traité par le microprocesseur 105. Le microprocesseur 105 constate qu'il s'agit d'un message à destination de la carte 113. En effet, l'entête du message comporte AT+ signifiant qu'il s'agit d'une commande HAYES, et CTKP signifiant donc qu'il s'agit d'un message à destination de la carte toolkit, le P signifiant qu'il s'agit d'informations de paramétrage. Le microprocesseur 105 adresse donc ces informations à la carte 113 via les circuits 112. En général la liaison entre le module 101 et la carte 113 est une liaison en série. Le format des données qui circulent sur cette liaison est défini par la recommandation 11.4 de la norme GSM. Lorsqu'il reçoit ces informations, le microprocesseur 114 stocke les informations dans une zone de la mémoire 117. Dans le cas de l'étape 201, le message reçu du PDA 102 sera traduit dans un premier temps en instructions de positionnement d'un pointeur d'écriture, puis en ordre d'écriture de blocs de données à l'endroit où pointe le curseur. Les données écrites correspondent alors aux possibilités en PDA 102.

Après l'étape 201, on passe à une étape 202 d'envoi d'un message de la carte 113 vers le module 101. Un tel envoi ne peut être fait qu'après une sollicitation du circuit 113 par le module 101. C'est-à-dire par le microprocesseur 105. Cette sollicitation peut être soit une commande, soit un message de polling comme précédemment expliqué. Lorsque le microprocesseur 105 a reçu le message émis par les circuits 113, on passe à une étape 203 de détermination du destinataire de ce message.

Dans l'étape 203, le microprocesseur 105, détermine à qui est destiné le message qu'il vient de recevoir. Les critères pour déterminer qui est le destinataire peuvent être par exemple : est-ce qu'il s'agit d'un message concernant l'IHM ou est-ce qu'il s'agit d'un message concernant la gestion du réseau GSM auquel est connecté le module 101. Un message concernant l'IHM peut être, soit une demande de renseignements que doit saisir l'utilisateur du PDA 102 pour que l'application toolkit puisse effectuer son traitement, soit une réponse faite par une application toolkit à une sollicitation du PDA 102. Un message en rapport avec le réseau GSM peut être par exemple une demande d'établissement d'une connexion sur ledit réseau. Une application toolkit est un ensemble de codes instructions stockés dans la mémoire 115 et exécuté par le microprocesseur 114.

Si le message reçu par le microprocesseur 105 n'est pas pour le PDA 102, on passe à une étape 204 de traitement du message par le module. Sinon on passe à une étape 205 d'envoi d'un message au format HAYES du module 101 vers le terminal 102.

Dans l'étape 204, considérons que l'application toolkit a demandé l'établissement d'une connexion sur le réseau 111. Cette demande peut faire suite, par exemple, à une sollicitation de l'utilisateur via le PDA 102. Cette sollicitation correspond à une demande d'établissement d'une liaison distante pour se connecter à un réseau de type WAP. L'application toolkit en recevant cette sollicitation sait donc qu'il faut établir une liaison sur le réseau GSM, mais elle sait aussi que le microprocesseur 120 n'a pas à être informé des détails de l'établissement de cette connexion. L'établissement de cette connexion est donc géré intégralement, et de manière connue, par le module 101. La seule information relatif à l'établissement de cette liaison qui remontera vers le PDA 102 est l'échec ou le succès de la tentative d'établissement de la liaison.

Dans l'étape 205, le microprocesseur 105 formate un message de type HAYES et envoie ce message vers le PDA 102. Le message est formaté en fonction du message reçu par le microprocesseur 105 dans l'étape 202. Ce message pourra être soit
+CTKC commande, paramètres
s'il s'agit d'une commande que le microprocesseur 114 demande au microprocesseur 120 d'effectuer, soit une commande
+CTKE commande, paramètres
s'il s'agit d'avertir le PDA 100 du résultat du traitement d'une commande antérieure, par exemple du succès de l'établissement d'une connexion.

Une commande +CTKC ou +CTKE est suivie d'une liste de paramètres. Dans le cas d'une commande +CTKC il s'agit au moins de la commande à effectuer, ainsi que des paramètres utiles pour effectuer cette commande. Cette commande peut être par exemple une requête de saisie d'informations par l'utilisateur du PDA 102. Par exemple le microprocesseur 114 a besoin d'un mot de passe pour pouvoir se connecter à un site WAP par exemple. Le message de type HAYES une fois constitué est envoyé au microprocesseur 120. C'est l'étape 206 de traitement de ce message par le microprocesseur 120.

Dans l'étape 206, le microprocesseur 120 décode le message. S'il s'agit par exemple de demander à l'utilisateur de saisir un mot de passe, le microprocesseur 120 provoque l'affichage sur un écran 122 du PDA 102 un message demandant à l'utilisateur du PDA 102 de saisir un mot de passe. L'utilisateur saisit ce mot de passe puis le valide. En place et lieu du mot de passe il peut s'agir de toute autre information, comme de répondre à une question par exemple ou d'effectuer un choix entre deux embranchements possibles sur un site WAP.

De l'étape 206 on passe à une étape 207 dans laquelle on détermine si le traitement du message reçu appelle ou non une réponse. Si oui, on passe à une étape 208 d'envoi d'un message du PDA 102 vers le module 101. Sinon on passe à une étape 209. De l'étape 204 on passe également à l'étape 209.

Dans l'étape 208, le microprocesseur 120 constitue un message au format HAYES de type
AT+CTKR paramètre

Le paramètre étant une réponse au traitement du message précédent, +CTKC. La réponse est par exemple le mot de passe saisi par l'utilisateur. Le message une fois constitué est envoyé vers le microprocesseur 105 qui le transformera avant de l'émettre en direction de la carte 113.

Dans l'étape 209 un événement aléatoire survient, et cet événement est détecté par le PDA 102. L'étape 209 peut survenir à n'importe quel moment, et pas spécifiquement après une étape telle que 204 ou 208. Cet événement est, par exemple, une sélection, sur le PDA 102, d'une option de connexion à un site WAP par l'utilisateur du PDA 102. On passe à l'étape 210 de constitution d'un message qui sera envoyé du PDA 102 vers le module 101. Ce message aura un format de type HAYES
AT+CTKV paramètres
suivi de paramètres indiquant la nature de l'événement. De l'étape 210 on passe à une étape 211 dans laquelle le module 101, c'est-à-dire le microprocesseur 105 traduit le message qu'il vient de recevoir de la part du PDA 102 et l'envoie pour traitement au circuit 113. Le microprocesseur 114 effectue alors le traitement correspondant au message qu'il vient de recevoir. S'il s'agit d'une demande de connexion à un site WAP, le microprocesseur 114 initie alors une connexion sur le réseau GSM pour pouvoir se connecter à ce site WAP. On passe à une étape 212 de détermination pour savoir si le message reçu par le microprocesseur 114 dans l'étape 211 nécessite ou pas une réponse.

Si le message nécessite une réponse, on passe à une étape 213 de constitution d'un message par le microprocesseur 114. Ce message sera envoyé au microprocesseur 105. On passe alors à une étape 214 dans laquelle le microprocesseur 105 formate le message qu'il vient de recevoir à l'étape 213 en un message au format HAYES
+CTKER paramètres
suivi de paramètres correspondant à la réponse au message reçu par le microprocesseur 114 dans l'étape 211.

En général les messages de type AT+CTKV sont dits des messages enveloppes. Dans la norme cela signifie que ce sont des messages hors contexte. En d'autres termes cela signifie que le message que reçoit le microprocesseur 114 n'a a priori rien à voir avec l'activité qu'il est en train d'effectuer. Le message +CTKER correspond à une réponse à un message enveloppe.

En règle générale, si le microprocesseur 105 reçoit de la part du microprocesseur 114 une commande qui doit être traitée en partie ou totalement par le PDA 102, le microprocesseur 105 filtre les éléments du message de commande qu'il doit envoyer au PDA 102. Cet envoi se fera dans un message de type +CTKC suivi des paramètres intéressant le PDA 102.

Si la commande nécessite une réponse de la part du PDA 102, la réponse sera envoyée sous la forme d'un message AT+CTKR suivi du type de la commande et de la réponse qui est apportée à cette commande.

Si le traitement d'une commande est réparti entre le microprocesseur 120 et le microprocesseur 105, le microprocesseur 105 enverra au PDA 102 un message de type +CTKE suivi de paramètres pour indiquer qu'il a fini de traiter la partie lui incombant.

Il existe un autre type de commande envoyé du module 101 vers le PDA 102. Il s'agit d'une commande du type AT+ CTKF suivi d'un type de commande et de paramètres. Cette commande indique au PDA 102 que le microprocesseur 114 n'a pas pu effectuer une action qui lui avait été demandée.

## Revendications

1. Procédé de gestion d'un module (101) de communication, comportant des moyens (105, 106a, 107, 109) pour réaliser une fonction de communication et un microcircuit (113) amovible, le module coopérant avec un terminal (102) qui comporte des moyens, dont un microprocesseur (120), pour réaliser une interface homme machine, dans le procédé de gestion le microcircuit et le terminal communiquent en émettant des messages via une connexion (119) module-terminal entre le module et le terminal, procédé de gestion **caractérisé en ce qu'**il comporte les étapes:
- émission (202) de messages par le microcircuit vers le terminal,
- répartition (203), dans le module comportant le microcircuit, des messages émis par le microcircuit, entre les messages intéressant uniquement le module et les messages qui sont effectivement transmis au terminal.

2. Procédé selon la revendication 1 **caractérisé en ce qu'**il comporte les étapes:
- traitement (206), par le terminal, d'un message, émis par le microcircuit,
- notification (208) des résultats du traitement, du message émis par le microcircuit, au microcircuit.

3. Procédé selon l'une des revendications 1 ou 2; **caractérisé en ce que** le module filtre (203) les messages émis par le microcircuit pour transmettre, au terminal, ceux en rapport avec une gestion de l'interface homme machine, des autres messages qui sont traités par des moyens (105 - 107) de traitement du module.

4. Procédé selon l'une des revendications 1 à 3, **caractérisé en ce que** le module filtre (212) les messages émis par le microcircuit pour transmettre ceux correspondant à une réponse du microcircuit suite à une requête émise par le terminal, des autres messages qui sont traités par des moyens du module.

5. Procédé selon l'une des revendications 1 à 4, **caractérisé en ce que** les messages échangés entre le microcircuit et le terminal sont formatés selon un format de type Hayes par des moyens de formatage du module.

6. Procédé selon l'une des revendications 1 à 5, **caractérisé en ce qu'**un message émis par le microcircuit ou le terminal respectivement a destination du terminal ou du microcircuit respectivement est compris dans la liste suivante:
+CTKC liste de paramètres
AT+CTKR liste de paramètres
+CTKE liste de paramètres
AT+CTKV liste de paramètres
+CTKER liste de paramètres
AT+CTKP liste de paramètres
AT+CTKF liste de paramètres

7. Dispositif de communication comportant un terminal (102), comportant des moyens pour réaliser une interface homme machine, et un module (101) d'extension pour le terminal, le module d'extension comportant un microcircuit (113), **caractérisé en ce que**:
- le terminal et le module comportent des moyens (103, 104, 105, 106b, 106c, 120, 121b) de communication pour communiquer entre eux,
- le module comporte des moyens (105, 106c) pour filtrer des messages émis par le microcircuit, les moyens pour filtrer coopérant avec les moyens pour communiquer, le module traitant lui-même certains messages émis par le microcircuit, le module émettant vers le terminal les messages émis par le microcircuit que le module ne traite pas.

8. Dispositif selon la revendication 7, **caractérisé en ce que** le terminal comporte des moyens (120, 121b) de gestion du microcircuit coopérant avec les moyens de communication.

## Patentansprüche

1. Verfahren zur Steuerung eines Kommunikationsmoduls (101), das Einrichtungen (105, 106a, 107, 109) zur Durchführung einer Kommunikationsfunktion und eine abnehmbare Mikroschaltung (113) aufweist, wobei das Modul mit einem Anschluß (102) zusammenwirkt, der Einrichtungen, darunter einen Mikroprozessor (120) zur Verwirklichung einer Schnittstelle Mensch/Maschine aufweist, wobei bei dem Steuerungsverfahren die Mikroschaltung und der Anschluß kommunizieren, indem sie über eine Verbindung (119) Modul-Anschluß zwischen dem Modul und dem Anschluß Nachrichten austauschen, wobei das Steuerungsverfahren **dadurch gekennzeichnet, ist, daß** es die folgenden Schritte aufweist:
- Ausgabe (202) von Nachrichten für die Mikroschaltung an den Anschluß,
- Aufteilen (203) der durch die Mikroschaltung ausgegebenen Nachrichten in dem Modul, das die Mikroschaltung aufweist, in die Nachrichten, die nur das Modul interessieren, und in Nachrichten, die wirklich an den Anschluß übertragen werden.

2. Verfahren nach Anspruch 1, **gekennzeichnet durch** die folgenden Schritte:
- Verarbeiten (206) einer Nachricht **durch** den Anschluß, die von der Mikroschaltung ausgegeben wurde,
- Melden (208) der Ergebnisse der Verarbeitung der **durch** die Mikroschaltung ausgegebenen Nachricht an die Mikroschaltung.

3. Verfahren nach einem der Ansprüche 1 oder 2, **dadurch gekennzeichnet, daß** das Modul aus den anderen Nachrichten, die durch Verarbeitungseinrichtungen (105-107) des Moduls verarbeitet werden die durch die Mikroschaltung ausgesendeten Nachrichten filtert (203), um dem Anschluß diese zu übertragen, die einen Zusammenhang mit der Steuerung der Schnittstelle. Mensch/Maschine haben.

4. Verfahren nach einem der Ansprüche 1 bis 3, **dadurch gekennzeichnet, daß** das Modul die durch die Mikroschaltung ausgesendeten Nachrichten aus den anderen Nachrichten, die durch Einrichtungen der Module verarbeitet werden, herausfiltert und diese überträgt, die einer Antwort der Mikroschaltung auf.eine von dem Anschluß ausgegebene Anfrage entsprechen.

5. Verfahren nach einem der Ansprüche 1 bis 4, **dadurch gekennzeichnet, daß** die zwischen der Mikroschaltung und dem Anschluß ausgetauschten Nachrichten durch Formatierungseinrichtungen des Moduls in ein Format des Typs Hayes formatiert werden.

6. Verfahren nach einem der Ansprüche 1 bis 5, **dadurch gekennzeichnet, daß** eine durch die Mikroschaltung oder den Anschluß ausgegebene Nachricht jeweils für den Anschluß oder die Mikroschaltung in der folgenden Liste enthalten ist:
+CTKC Liste der Parameter,
AT+CTKR Liste der Parameter,
+CTKE Liste der Parameter,
AT+CTKV Liste der Parameter,
+CTKER Liste der Parameter,
AT+CTKP Liste der Parameter,
AT+CTKF Liste der Parameter.

7. Kommunikationsvorrichtung, die einen Anschluß (102) aufweist, der Einrichtungen zur Verwirklichung einer Schnittstelle Mensch/ Maschine aufweist, und ein Erweiterungsmodul (101) für den Anschluß, wobei das Erweiterungsmodul eine Mikroschaltung (113) aufweist, **dadurch gekennzeichnet, daß**
- der Anschluß und das Modul Kommunikationseinrichtungen (103, 104, 105, 106b, 106c, 120, 121b) für die Kommunikation untereinander aufweisen,
- das Modul Einrichtungen (105, 106c) aufweist, die von der Mikroschaltung ausgegebene Nachrichten filtern, wobei die Filtereinrichtungen mit den Kommunikationseinrichtungen zusammenwirken, wobei das Modul selbst einige durch die Mikroschaltung ausgegebenen Nachrichten verarbeitet, wobei das Modul an den Anschluß die durch die Mikroschaltung ausgegebenen Nachrichten aussendet, die das Modul nicht verarbeitet.

8. Vorrichtung nach Anspruch 7, **dadurch gekennzeichnet, daß** der Anschluß Steuereinrichtungen (120, 121b) der Mikroschaltung aufweist, die mit den Kommunikationseinrichtungen zusammenwirken.

## Claims

1. Process for management of a communications module (101), including means (105, 106a, 107, 109) for performing a communications function and a removable micro-circuit (113), the module co-operating with a terminal (102) which includes means, including a micro-processor (120), for creating a man-machine interface, in the management process the micro-processor and the terminal communicate by transmitting messages via a module-terminal connection (119) between the module and the terminal, management process ***characterised* by** the fact that it includes the steps:
- transmission (202) of messages by the micro-circuit to the terminal,
- division (203), in the module including the micro-circuit, of the messages transmitted by the microcircuit, between the messages solely concerning the module and the messages which are actually transmitted to the terminal.

2. Process as described in claim 1, **characterised by** the fact that it includes the steps:
- processing (206), by the terminal, of a message, transmitted by the micro-circuit,
- notification (208) of the results of the processing, of the message transmitted by the micro-circuit, to the micro-circuit.

3. Process as described in one of claims 1 or 2, ***characterised by*** the fact that the module filters (203) the messages transmitted by the micro-circuit to transmit, to the terminal, those relating to management of the man-machine interface, from the other messages which are processed by the processing means (105 - 107) of the module.

4. Process as described in one of claims 1 to 3, ***characterised by*** the fact that the module filters (212) the messages transmitted by the micro-circuit to transmit those corresponding to a response from the micro-circuit following a request transmitted by the terminal, from the other messages which are processed by means which are of the module.

5. Process as described in one of claims 1 to 4, ***characterised by*** the fact that the messages exchanged between the micro-circuit and the terminal are formatted in accordance with a format of Hayes type by formatting means of the module.

6. Process as described in one of claims 1 to 5, **characterised by** the fact that a message transmitted by the micro-circuit or the terminal to the terminal or the micro-circuit respectively is included in the following list:
+CTKC parameter list
AT+CTKR parameter list
+CTKE parameter list
AT+CTKV parameter list
+CTKER parameter list
AT+CTKP parameter list
AT+CTKF parameter list

7. Communications device including a terminal (102), including means for creating a man-machine interface, and an extension module (101) for the terminal, the extension module including a micro-circuit (113), ***characterised by*** the fact that:
- the terminal and the module include communication means (103, 104, 105, 106b, 106c, 120 121b) for communication between them,
- the module includes means (105, 106c) for filtering messages transmitted by the micro-circuit, the filtering means co-operating with the communication means, the module itself processing certain messages transmitted by the micro-circuit and the module transmitting to the terminal the messages transmitted by the micro-circuit which the module does not process.

8. Device as described in claim 7, ***characterised by*** the fact that the terminal includes means (120, 121b) for management of the micro-circuit co-operating with the communication means.
